# EUROPEAN PATENT APPLICATION

(11) **EP 3 610 729 A1**
(43) Date of publication of application: **19.02.2020**
(21) Application number: 18189286.0
(22) Date of filing: 16.08.2018
(51) Int. Cl.: A01N 41/04, A01P 7/04

(54) **COMPOSITIONS AND METHODS FOR VARROA MITE CONTROL**

(71) Applicant: Bayer CropScience LP, Research Triangle Park, NC 27709 (US)
(72) Inventor: WU, Tai-Teh, 27514 Chapel Hill (US); ROGERS, Richard, 27516 Chapel Hill (US); CHRISTENSEN, Gary, 27560 Morrisville (US)
(74) Representative: BIP Patents

(57) **Abstract**

The disclosure provides for compounds, compositions, and methods of controlling or reducing a honey bee parasitic mite or for the treatment or prevention of a parasitization in a honey bee hive.

## Description

### FIELD

The disclosure provides for compounds, compositions, and methods of controlling or reducing pests, for example, *Varroa* mites, that parasitize or prey on insects, for example, a bee.

### BACKGROUND

Honey bees, for example, *Apis mellifera* and *Apis cerana,* are important to global agriculture for the pollination services they provide. Honey bees produce economically important products, including honey and bees wax. Honey bees are susceptible to a number of parasites, predators, and pathogens, including the ectoparasitic mite, *Varroa destructor.* Varroa mites parasitize pupae and adult bees and reproduce in the pupal brood cells. The mites use their piercing-sucking mouth parts to puncture the exoskeleton and feed on the bee's hemolymph and fat bodies. These wound sites in the exoskeleton can be a point of entry for infectious organisms, such as the bacterium *Melissococcus pluton,* which causes European foulbrood, and numerous viruses, and possibly other organisms. *Varroa* mites are also known vectors for a number of honey bee pathogens, including deformed wing virus (DWV), Kashmir bee virus (KBV), acute bee paralysis virus (ABPV), and black queen cell virus (BQCV), and the direct feeding by *Varroa* may weaken the immune systems of their hosts, leaving them even more vulnerable to infections. Maintaining a supply of strong honey bee colonies available for pollination is helpful for the sustained production of agricultural crops. Current methods of treating *Varroa* infestations are proving to be less effective as the mites develop resistance to existing miticides. In addition, the use of such miticides may introduce residues of active ingredients and breakdown products into honey that is intended for human consumption, and into honey and wax where honey bee adults and brood can be unintentionally exposed to chronic doses.

There is a need to develop new compounds, compositions, and methods for treating, controlling, reducing, or preventing parasitic mite infestations. The disclosed compounds, compositions and methods have the ability to reduce, control, or prevent parasitic mite infestations in a manner that was not previously recognized.

### SUMMARY

The disclosure provides for methods, compounds, and compositions for reducing or controlling a pest, for example, a *Varroa* mite, that parasitizes or preys on an insect, for example, a honey bee.

In an aspect, the disclosure provides a method of controlling a pest (*e.g., Varroa* mite, tracheal mite) that parasitizes or preys on an insect, for example, a honey bee. In an aspect, methods described herein comprise contacting the pest with an effective amount of a compound of formula (I), or a composition comprising a compound of formula (I), thereby controlling a pest. A compound of formula (I) is described below: 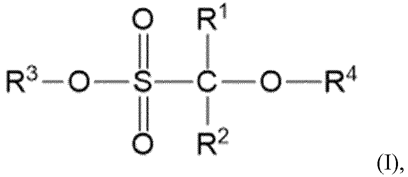 wherein
R¹ represents hydrogen or alkyl, optionally substituted;
R² represents hydrogen, alkyl, alkyloxyalkyl, alkylaminoalkyl, hydroxyalkyl, thioalkyl, thioalkoxyalkyl (thio can be all oxidation states), branched alkyl, phenyl alkyl, allyl, propargyl, phenyl, substituted phenyl, benzyl, heterocyclic alkyl, the heterocyclic ring covers oxygen, nitrogen sulfur containing ring of non-aromatic or aromatic ring; the alkyl described herein can be substituted with one or more halogen, hydroxyl, alkoxy, alkylcarbonyl, amino; thio and oxidation states, amido, hydroxycarbonyl, aryl ring, heterocyclic ring;
R³ represents hydrogen, Na⁺, K⁺, Li⁺, Mg²⁺, Ca²⁺, provided when R³ represents Mg²⁺ or Ca²⁺ the molecules can be dimers; and
R⁴ represents hydrogen or alkyl.

In an aspect, compounds of formula I may be in the form of dimers. In another aspect, compounds of formula I may be in the form of a dimer when R³ represents Mg²⁺ or Ca²⁺.

In an aspect, the disclosure provides for methods, compositions, or compounds for promoting the health of an insect by reducing or controlling a pest that parasitizes or preys on the insect.

In another aspect, the disclosure provides for methods, compositions, or compounds for reducing the incidence and impact of diseases vectored by mites, for example, deformed-wing virus.

In an aspect, the insect is a pollinating insect, such as a honey bee.

In another aspect, the compound of formula (I) includes at least one C₆-C₁₅ ketone. In an embodiment, the compound of formula (I) includes at least one C₈-C₁₅ ketone.

In another aspect, the C₆ - C₁₅ ketone is selected from the group consisting of 3-heptanone, 4-heptanone, cycloheptanone, 2-octanone, 3-octanone, cyclooctanone, 2- nonanone, cyclononanone, 2-decanone, 3-decanone, 4-decanone, 5-decanone, 2-undecanone, 2-dodecanone, 2-trideconone, 2-tetradecanone, 2-pentadecanone, 2-hexadecanone, 2-heptadecanone, cyclodeconone, and sulfur analogs of 2-decanone.

In an aspect, compounds of formula I may be in the form of dimers. In another aspect, compounds of formula I may be in the form of a dimer when R³ represents Mg²⁺ or Ca²⁺.

In an aspect, a composition described herein includes two, three, four, or five miticide compounds.

In yet another aspect, a compound of Formula I or a composition comprising at least one compound of Formula I controls or reduces a larger percentage of pests, for example pests described herein such as v*arroa* mites, relative to other commercial agents, such as Apivar®. In an aspect, a compound of Formula I or a composition comprising at least one compound of Formula I controls or reduces a pests, for example pests described herein such as v*arroa* mites, by at least about 10%, by at least about 20%, by at least about 30%, by at least about 50%, by at least about 75%, about 10% to about 75%, about 25% to about 75%, about 10% to about 50% relative to other commercial agents, such as Apivar®. In an aspect, the control or reduction is relative to a composition comprising Amitraz. In another aspect, the control or reduction is relative to a composition comprising about 2%, about 3%, about 3.33%, about 4%, about 5%, about 1% to about 10%, about 2% to about 4%, or about 3% to about 4% of Amitraz.

In an embodiment, the exposure occurs while the mite is in contact with a honey bee (e.g., honey bee egg, larva, or pupa) or is in transition from adult bee to brood cell, or brood cell to another adult bee.

In an aspect, the disclosure provides a method of treating or preventing a parasitic mite infestation of a honey bee hive. The method involves contacting the hive with an effective amount of a compound of formula (I), or a composition comprising a compound of formula (I), thereby treating or preventing a parasitic mite infestation in a honey bee hive.

In an aspect, the disclosure provides for compounds or compositions for treating or preventing mite infestation, the composition comprising an effective amount of a composition of formula (I) in a suitable form for delivery to a mite. Suitable forms include, for example, any one or more of a liquid, a powder, an oil, an emulsion, a paste, a capsule, a vapor, a strip, a substrate, or any other form capable of delivering a compound of formula (I) to a *Varroa* mite in contact with a honey bee or honey bee hive. If desired, the composition further comprises a carrier medium.

In an aspect, the disclosure provides a controlled release composition for treating or preventing a parasitic mite infestation, the composition comprising an effective amount of a compound of formula (I) in a suitable form for delivery to a honey bee parasitic mite.

In an aspect, the disclosure provides a controlled delivery of ketones and aldehydes for control of *Varroa* mite, including, but not limited to, acetone, 2-propanone, 2-butanone, 2-pentanone, 2-heptanone, 2-hexanone, 2-decanone, 2-octanone, 2-nonanone, 2-undecanone, benzaldehyde, methylphenyl ketone, alkyoxyalkyl alkyl ketones such as methoxymethyl methyl ketone.

In an aspect, compositions and methods described herein may exclude (2-haptanone, 2-undecanone, 2-dodecanone, or combinations thereof.

In an aspect, the disclosure provides a miticide delivery device, the device comprising a compound or composition of any previous aspect. In an embodiment, the device is selected from the group consisting of a strip, controlled release strip, substrate, controlled release substrate, device, tablet, reservoir, polymer disc, evaporation device, fiber, tube, polymeric block, membrane, pellet, tray, and microcapillary. If desired, any of these devices can be formulated in a biodegradable form.

In an aspect, the disclosure provides a hive comprising a compound or composition of any previous aspect.

In an aspect, the disclosure provides a honey bee product produced in a hive of any previous aspect. Honey bee products include, but are not limited to, honey, honey comb, and bees wax.

In an aspect, the disclosure provides a kit for the treatment or prevention of a parasitic mite infestation, the kit comprising an effective amount of a compound of formula (I), or a composition comprising a compound of formula (I), in a form suitable for delivery to a site of infestation (e.g., a bee hive or a bee).

In an aspect, the disclosure provides a method of identifying a compound of formula (I) that disrupts a biological function of a honey bee parasitic mite. In another aspect, the method involves contacting the parasitic mite with a test composition comprising a compound of formula (I), and assaying a parasitic mite biological function. In an embodiment, the test composition disrupts a parasitic mite biological function (e.g., kills or incapacitates the parasitic mite or reduces parasitic mite reproduction). In another embodiment, the method further includes the steps of contacting a honey bee with the test composition and assaying a honey bee biological function. In another embodiment, the method identifies a test compound that does or does not disrupt a honey bee biological function. In another embodiment, the method identifies a test composition that does not kill a honey bee.

In a related aspect, the disclosure provides a method of identifying a compound of formula (I) that does not disrupt a biological function of a honey bee. The method involves contacting the honey bee with a test composition comprising a compound of formula (I) and assaying a honey bee biological function. In an embodiment, the method identifies a test compound that does or does not disrupt a honey bee biological function. In another embodiment, the test compound kills a honey bee.

In an embodiment, the weight percent of a compound of formula (I) in a composition ranges between about 1% and about 99%. In an aspect, a composition described herein contains a compound of formula (I) in at least about 1%, 2.5%, 5%, 7.5%, 10%, 12%, 15%, 20%, 25%, 35%, 40%, 50%, 60%, 75%, 85%, 90%, or 95% by weight of the composition. In another aspect, a composition described herein contains a compound of formula (I) in no more than about 1%, 2.5%, 5%, 7.5%, 10%, 12%, 15%, 20%, 25%, 35%, 40%, 50%, 60%, 75%, 85%, 90%, or 95% by weight of the composition. In yet another aspect, a composition described herein contains a compound of formula (I) in an amount from about 0.5% to about 50%, from about 0.25% to about 25%, from about 0.2% to about 10%, from about 0.5% to about 5%, from about 1% to about 10%, from about 0.5% to about 5%, or from about 1% to about 3% by weight of the composition.

In an embodiment of any of the above aspects, the contacting disrupts a biological function of a mite. Exemplary biological functions include any one or more of respiration, neural activity, locomotion, reproduction, or any other physiological activity required for mite survival. In an embodiment, the contacting kills the mite. In yet other embodiments, a composition comprising a compound of formula (I) is a controlled release or slow-release composition wherein the compound of formula (I) is released over the course of at least one hour to 12 months. For example, the compound of formula (I) is released over at least 1, 2, 4, 6, 8, 10, 12, or 24 hours; or is released over at least 2, 3, 4, 5, 10, 14, 28, 35, 42, or 48 days; or is released over the course of 1, 2, 4, 6, 8, 10, or 12 weeks; or even for as long as 5, 6, 9, or 12 months.

### DETAILED DESCRIPTION

The present disclosure is directed to methods, compounds, adducts, compositions, and formulations to control and/or reduce acarids and other related species of the family *Varroidae.* The disclosure is based, in part, on the discovery that application of a chemical adduct (*i.e.,* molecules connected in a covalent bond) such as ketone or aldehyde adduct with sodium bilsulfite provides a novel method for delivering the corresponding ketone or aldehydes at very low doses in a slow and controlled manner. Bioassay results described herein indicate bioefficacy in a whole-hive trial for *Varroa* mite control without sacrificing bee safety.

In an aspect, the compound or composition described herein repels a range of pests described herein. In another aspect, a repelling, controlling, and/or directing compound or composition described herein is specific for repelling *Varroa* mites.

Representative descriptions of *Apis* genus, acarids, mite control, and miticide screening are set forth in U.S. 2007/0232188, the content of which is incorporated by reference.

In an aspect, the disclosure provides for a method of reducing or controlling a honey bee parasitic mite or for the treatment or prevention of a parasitic mite (*e.g.,* mites of the genus *Varroa,* specifically of the species *destructor*) infestation by contacting the parasitic mite (or a honey bee) with an effective amount of a compound of formula (I) or a composition comprising a compound of formula (I), 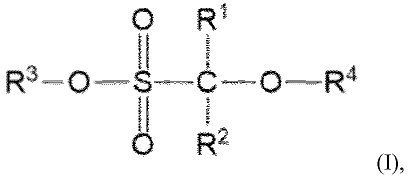 wherein
R¹ represents hydrogen or alkyl, optionally substituted;
R² represents hydrogen, alkyl, alkyloxyalkyl, alkylaminoalkyl, hydroxyalkyl, thioalkyl, thioalkoxyalkyl (thio can be all oxidation states), branched alkyl, phenyl alkyl, allyl, propargyl, phenyl, substituted phenyl, benzyl, heterocyclic alkyl, the heterocyclic ring covers oxygen, nitrogen sulfur containing ring of non-aromatic or aromatic ring; the alkyl described herein can be substituted with one or more halogen, hydroxyl, alkoxy, alkylcarbonyl, amino, thio and oxidation states, amido, hydroxycarbonyl, aryl ring, heterocyclic ring;
R³ represents hydrogen, Na⁺, K⁺, Li⁺, Mg²⁺, Ca²⁺, provided when R³ represents Mg²⁺ or Ca²⁺ the molecules can be dimers; and
R⁴ represents hydrogen or alkyl.

In an embodiment,
R¹ represents hydrogen;
R² represents hydrogen;
R³ represents hydrogen or Na⁺; and
R⁴ represents hydrogen.

In an aspect, R¹ and R² are independently selected from hydrogen, methyl, ethyl, propyl, isopropyl, cyclopropyl, butyl, iso-butyl, tert-butyl, pentyl, hexyl, heptyl, octyl, nonyl, decyl, undecyl and substituted or non-substituted C₂-C₁₄-alkyl.

In another aspect, an alkyl group is a straight chain, branched, cyclic, cyclic alkyl optionally substituted with halogen, such as F, Cl, Br, I, oxygen, hydroxyl, alkoxy, cyano, aryloxy, C=C, C≡C; nitrogen, NH₂, alkyl amino, dialkyl amine trialkylamino; SH, alkylthio and oxidation states, arylthio and oxidation states; amido, monoalkylamino, dialkylamino, and ureido.

In an aspect, the compound of formula (I) includes at least one ketone, such as a C₅-C ₇ketone, C₆-C₉ketone, C₇-C₁₀ketone, a C₈-C₁₂ketone, C₁₀-C₁₂ketone, a C₇-C₁₅ketone, or a methyl ketone. In another aspect, the compound of formula (I) includes one or more of 2-pentanone, cyclopentanone, 2-pentanimine, 2-hexanone, 3-hexanone, cyclohexanone, 2-methylcyclohexanone, 3-methylcyclohexanone, 4-methylcyclohexanone, 2-heptanone, 3-heptanone, 4-heptanone, heptyl, 1-acetyl, cycloheptanone, 2-octanone, 3-octanone, cyclooctanone, 2- nonanone, cyclononanone, 2-decanone (methyl-n-octyl ketone), 2-undecanone (methyl-n-nonylketone), 2-dodecanone, 1,3-dioxolane, 2-methyl-2-octyl, 2-trideconone, 2-tetradecanone, 2-pentadecanone, 2-hexadecanone, 2-heptadecanone, 2-nonanethione, cyclodeconone, decane, 2, 2-dimethoxy, sulfur analog of 2-decanone, 2-decanimine, (+)-2-decanol, 2-decanol, 2,9-decanedione, 2,11-dodecanedione, 2,5-dodecanedione, 2,2-decanediol, 1-undecen-2-ol, 3-decanone, 4-decanone, 5-decanone, 9-methyl, decanal, ethanone, 1-[3-methyl-4-(trifluoromethyl) phenyl], ethanone, 2,2,2-trifluoro-1-phenyl, 5,9-undecadien-2-one, 6,10-dimethyl-, (5E)-, 2-pentadecanone, 4-methylcyclohexanone, p-methylacetophenone, propionphenone, 2-Hydroxyacetophenone, 2,9-decanedione, 2,11-dodecanedione, 2,5-dodecanedione, and 2-hydroxy acetophenone.

In an aspect, the insect repelling, controlling, or directing compound or composition is selected from the group consisting of a compound from 3-heptanone, 4-heptanone, cycloheptanone, 2-octanone, 3-octanone, cyclooctanone, 2- nonanone, cyclononanone, 2-decanone, 3-decanone, 4-decanone, 5-decanone, 2-undecanone, 2-dodecanone, 2-trideconone, 2-tetradecanone, 2-pentadecanone, 2-hexadecanone, 2-heptadecanone, cyclodeconone, and sulfur analogs of 2-decanone.

In yet another aspect, a composition of the disclosure further comprises one or more of a compound or composition selected from the group consisting of pine oil, tea tree oil, essential oil of tea tree, densifolia leaf essential oil, essential oil of ocimum santum, systox, phenol, alkaloids, carum copticum oil, propionic anhydride, butyric anhydride, methyl salicylate, 6-hexatriacontene, stenpcereol, 27,28,29-trisnor-13-15-17-meratriene, samaderine E, phenylacetaldehyde, benzaldehyde, Swertia densifolia leaf essential oil, linalool, ambrette seed oil, cascarilla bark oil, leaf oil, cascarilla bark oil, rue oil, rue flower oil, terpineol, stearic acid, hydroquinone and octadecanal, methyl anthranilate, methyl anthranilate, creosote, acetic acid and propionic acid, N,N-diethyltoluamide, dimethyl phthalate, and isopropyl cinnamate. A composition of the disclosure may also comprise one or more compound or compound combinations selected from the group consisting of citronella (for example, Cymbopogon spp, Cymbopogon nardus, Cymbopogon winterianus and Cymbopogon citratus), eucalyptus (Eucalyptus spp.), lemon eucalyptus (Corymbia citriodora), cinnamon (Cinnamomum verum), castor (Ricinus communis), rosemary (Rosmarinus officinalis), cedar (Cedrus spp.), peppermint (Mentha piperita), clove (Syzygium aromaticum), geranium (Pelargonium graveolens), verbena (Verbena spp., Verbena officinalis), pennyroyal (Mentha pulegium), lavender (Lavandula spp.), pine (Pinus spp.), cajeput (Melaleuca spp.; Melaleuca leucadendra), basil (Ocimum basilicum), thyme (Thymus vulgaris), pandan (Pandanus amaryllifolius), allspice (Pimenta dioica), soybean (Glycine max), garlic (Allium sativum), DEET, Picaridin, p-Mentane-3,8-diol, Permethrin, Allethrin, Metofluthrin, Geraniol, Eugenol, Cinnamaldehyde, Alkaloids, p-cymene, linalool, α-pinene, β-pinene, sabinene, myrcene, α-phellandrene, α-terpinene, α-terpineol (a component of tea tree oil and pine oil), α-ter, limonene, 1,8-cineole, y-terpinene, terpinolene, terpinen-4-ol and α-terpineol, copticum, and Ptychotis oil.

In an aspect, the compounds and compositions described herein exhibit a synergistic influence when combined. In another aspect, the compositions and compositions described herein exhibit an additive effect when combined.

In an aspect, the compounds or compositions described herein comprise, consist of, or consist essentially of any of the compounds or compositions described herein.

In another aspect, the compound, compound combination, or composition does not include heptanone, 2-heptanone, compounds that mimic the activity of 2-heptonone, 2-undecanone, 2-dodecanone, 2-trideconone, N,N-diethyl-m-toluamide ("DEET"), benzaldehyde, phenol, or any combination thereof.

In an aspect, the composition does not contain a neem plant, neem part thereof, neem oil, or neem extract.

Lower or higher doses than those recited herein may be required to effectively kill mites without adversely affecting honey bees. Specific dosage and treatment regimens are determined empirically as described herein. Compositions of the disclosure are also useful for preventing the establishment of an acarid infestation, for treating an established acarid infestation, and for maintaining the health of a hive previously treated for an acarid infestation.

A compound of formula (I) can be provided to bees or bee hives in a number of convenient formulations. Formulations of the disclosure are used to target mites on the body of adult bees, in the brood cell, or in the hive. Desirably, the composition of the disclosure is active in the hive for at least forty-one days. This provides for the presence of the miticide for the entirety of the mite life cycle, which typically is completed over the course of twenty-one to thirty days. *Varroa* development from egg to adult female emergence from brood cell is 9-10 days. Forty-two days is a typical treatment cycle for currently registered compounds and is the length of two bee brood development cycles. This overlap treats mites in the hive and emerging from multiple cohorts of brood and is highly effective, assuming no reinfestation and close to 100% efficacy. Where activity is maintained for a shorter period, repeated administration of a compound or composition of the disclosure may be required. Compositions that are active for longer periods are also envisioned. Such compositions may be used for the long-term treatment or prevention of a mite infestation.

In an aspect, a compound described herein may be administered as a non-formulation.

In an aspect, a compound or composition described herein is added or applied to a substrate or applicator strip.

In an aspect, a compound or composition described herein can be administered as a formulation such as dust, granule, emulsifiable concentrate, wettable powder, soluble liquid concentrate, soluble powder, granules, dust, suspension concentrate, capsule suspensions, water (or oil) dispersible granules, microgranules (bait formulations).

In an aspect, a compound or composition described herein is formulated as a spray, solutions, emulsions, suspension, coating formulation, coating formulation, encapsulated formulation, solid, liquid, paste, granule, powder, suspension, or suspension concentrate. In another aspect, a compound or composition described herein may be employed alone or in solid, dispersant, or liquid formulation.

In another aspect, a compound or composition described herein may take a variety of dosage forms including, without limitation, suspension concentrates, aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, foams, pastes, pesticide-coated seed, suspoemulsion concentrates, soluble concentrates, suspensions, wettable powders, soluble powders, dusts and granules, water-soluble granules or tablets, wettable powders, natural products and synthetic substances impregnated with a compound or composition described herein, a net impregnated with a compound or composition described herein, and also microencapsulations in polymeric substances and in coating materials for seed, and also ULV cold-fogging and warm-fogging formulations.

In an aspect, a compound or composition described herein is administered as a wettable powder.

### Methods of Reducing or Controlling a Pest

In an aspect, the disclosure provides for a method of reducing or controlling a pest by utilizing a compound or composition described herein.

In an aspect, a compound or composition described herein reduces or controls all or a broad range of pests. In another aspect, a compound or composition described herein reduces or controls on a selective basis. In another aspect, a compound or composition described herein reduces or controls a pest in a manner such that the pest has only minimal contact with a treated substance.

In an aspect, the percent of the compound in any composition or formulation is determined by the interplay of the effectiveness of the compound's controlling or reducing, the medium or other components in which the compound is carried, the methods of application and the area that is being treated, when in terms of surface area or volume.

In an aspect, the disclosure provides for a method of promoting the health of an insect, for example a bee, by reducing or controlling a pest that parasitizes or preys on insects or bees. In another aspect, an insect habitat, for example, a bee hive, is treated with a compound or composition capable of reducing or controlling a pest that parasitizes or preys on insects, an insect, or bees. In another aspect, a pest is a mite, such as a *Varroa* mite or parasitic mite, as described herein.

In another aspect, the pest to be controlled or reduced is one detailed in U.S. Publication No. 20110171324 or U.S. Publication No. 20120157512, the contents of both which are incorporated by reference in their entirety. In another aspect, the pathogen or virus associated with the pest is reduced or eliminated from a bee or bee hive by reducing or controlling a parasite, predator, or a pest of a bee.

In an aspect, a method of "controlling" refers to the ability of a compound or composition described herein to control or alter the behavior of a pest, for example a *Varroa* mite. In order to be classified as "controlling" according to an aspect of the disclosure, it is not necessary that 100% of the pests, or other animals be controlled away from an area, location, structure, habitat, or substance of interest. In yet another aspect, an insect is "controlled" if at least 50%, at least 75%, at least 90%, at least 95%, or at least 98% of the pest behavior is altered or controlled relative to an area, location, structure, habitat, or substance of interest.

### Compound and Composition Properties

In an aspect, a compound or composition described herein is capable of reducing or controlling a pest, for example, a *Varroa* mite, described herein for at least about 30 minutes, about 1 hour, about 2 hours, 3 about hours, about 4 hours, about 5 hours, about 8 hours, about 10 hours, about 15 hours, about 20 hours, about 24 hours, about 48 hours, about 72 hours, about 7 days, about two weeks, about one month, about two months, or about three months or more. In another aspect, a compound or composition described herein reduces or controls a pest, for example, a *Varroa* mite, by at least about 20% or more, about 30% or more, about 40% or more, about 50% or more, about 60% or more, about 75% or more, about 90% or more, about 95% or more, about 98% or more, or about 99% or more relative to a compound or composition that does not contain an effective amount of a compound or composition described herein. In another aspect, a compound or composition described herein reduces or controls a pest, for example, a *Varroa* mite, by at least about 20% or more, about 30% or more, about 40% or more, about 50% or more, about 60% or more, about 75% or more, about 90% or more, about 95% or more, about 98% or more, or about 99% or more for at least about 30 minutes, about 1 hour, about 2 hours, about 3, hours, about 4 hours, about 5 hours, about 8 hours, about 10 hours, about 15 hours, about 20 hours, about 24 hours, about 48 hours, about 72 hours, about 7 days, about two weeks, about one month, about two months, about three months or more, relative to a compound or composition that does not contain an effective amount of a compound or composition described herein. In yet another aspect, a compound or composition described herein reduces or controls a pest, for example, a *Varroa* mite, by at least 95% or more, 96% or more, 97% or more, 98% or more, 99% or more, or 100% for at least about 30 minutes, about 1 hour, about 2 hours, about 3, hours, about 4 hours, about 5 hours, about 8 hours, about 10 hours, about 15 hours, about 20 hours, about 24 hours, about 48 hours, about 72 hours, about 7 days, about two weeks, about one month, about two months, about three months or more, relative to a compound or composition that does not contain an effective amount of a compound or composition described herein. In an aspect, the control or reduction is relative to Apivar®. In another aspect, the control or reduction is relative to a composition comprising Amitraz. In another aspect, the control or reduction is relative to a composition comprising about 2%, about 3%, about 3.33%, about 4%, about 5%, about 1% to about 10%, about 2% to about 4%, or about 3% to about 4% of Amitraz.

In yet another aspect, a compound or composition described herein reduces or controls a pest by about 10% to about 100%, about 20% to about 100%, about 30% to about 100%, about 40% to about 100%, about 50% to about 100%, about 60% to about 100%, about 70% to about 100%, about 80% to about 100%, about 10% to about 90%, about 20% to about 90%, about 30% to about 90%, about 40% to about 90%, about 50% to about 90%, about 60% to about 90%, about 70% to about 90%, about 10% to about 80%, about 20% to about 80%, about 30% to about 80%, about 40% to about 80%, about 50% to about 80%, or about 60% to about 80%, about 10% to about 70%, about 20% to about 70%, about 30% to about 70%, about 40% to about 70%, or about 50% to about 70%, relative to a compound or composition that does not contain an effective amount of a compound or composition described herein. In an aspect, the control or reduction is relative to Apivar®. In another aspect, the control or reduction is relative to a composition comprising Amitraz. In another aspect, the control or reduction is relative to a composition comprising about 2%, about 3%, about 3.33%, about 4%, about 5%, about 1% to about 10%, about 2% to about 4%, or about 3% to about 4% of Amitraz.

Additional devices for delivering pest control agents to bees or to a bee hive are known in the art. Such delivery devices include strips, controlled release strips, tablets, reservoirs, polymer discs, trays, and evaporation devices. If desired, the delivery device is provided in a biodegradable form. In particular, devices suitable for delivering a composition of the invention to a parasitic mite, to a honey bee, or to a honey bee hive are described, for example, in U.S. Patent Publication Nos. 20040229542, 20050090560, and 20020151249. Dispensing means and suitable compositions for controlled release are described in U.S. Pat. Nos. 6,843, 985; 6,037,374; 5,750,129; 4,775,534; 5,849,317; 5,348,511; 6,037,374; 3,577,515, which are incorporated herein by reference in their entirety.

The disclosure provides kits for the treatment or prevention of an acarid infestation. In one embodiment, the kit includes a composition containing an effective amount of a hop derivative in a form suitable for delivery to a site of infestation (e.g., bee hive). In some embodiments, the kit comprises a container which contains a miticide; such containers can be boxes, ampules, bottles, vials, tubes, bags, pouches, blister-packs, or other suitable container forms known in the art. Such containers can be made of plastic, glass, laminated paper, metal foil, or other materials suitable for holding miticides.

If desired the miticide of the disclosure is provided together with instructions for administering it to a site of infestation. The instructions will generally include information about the use of the composition for the treatment or prevention of an acarid infestation. In other embodiments, the instructions include at least one of the following: description of the miticide; dosage schedule and administration for treatment or prevention of a miticide infestation; precautions; warnings; description of research studies; and/or references. The instructions may be printed directly on the container (when present), or as a label applied to the container, or as a separate sheet, pamphlet, card, or folder supplied in or with the container.

In an aspect, a composition capable of being used with the methods described herein comprises, consists essentially of, or consists of a composition described herein.

By "acarid" is meant an arachnid of the subclass *Acari* (or *Acarina*), which includes mites and ticks.

By "biological function" is meant any physiological or behavioral activity of an organism. Exemplary biological functions include reproduction, respiration, neural activity, locomotion. Honey production is a biological function that is specific to a honey bee.

By "contacting" is meant touching, associating with, or having proximity to a composition. For example, a compound of formula (I) may contact a hive either inside or outside of the hive structure.

By "controlled release" or "slow-release" is meant released over the course of hours, days, weeks, or months.

By "controlling a parasitic mite" is meant inhibiting mite survival or reducing, slowing, or stabilizing the growth of a mite population.

By "comb" is meant sections of hexagonal bee wax cells that are used to rear honey bee progeny ("brood") and store honey and pollen.

By "effective amount of a miticide" is meant an amount effective to disrupt a mite biological function.

By "hive" is meant a structure that contains a bee colony. A modern box hive typically includes a bottom board, cover, and one or more boxes, stacked one above the other. Inside, each box contains a series of movable frames of comb or foundation held in a vertical position a bee space apart.

By "honey bee" is meant a Hymenopteran insect of the genus *Apis.* The term "honey bee" is not limited to the adult form of the insect, but encompasses all honey bee developmental stages, including but not limited to egg, larva, and pupa. Exemplary honey bee species include *Apis mellifera* and *Apis cerana.* "Honey bee" can refer to any member of the Order Hymenoptera, Family Apidae, and includes, without limitation, *Apis and reniformis, Apis cerana, Apis dorsata, Apisflorae, Apis mellifera, Apis koschevnikovi, Apis laboriosa, Apis nigrocincta, Apis rorea,* subspecies thereof, and strains, varieties, and hybrids thereof.

By "honey bee colony" is meant a community of bees. Honey bee colonies may occur in the wild or may be maintained by bee keepers.

By "honey bee parasitic mite" is meant any acarid that parasitizes a honey bee. Exemplary honey bee parasitic mites include *Varroa* mites and tracheal mites.

By "infestation" is meant the colonization of a site or the parasitization of an organism by a pest.

By "miticide" is meant an agent that inhibits a biological function of a mite.

By "miticidal activity" is meant any activity that inhibits the growth, reproduction, or survival of a mite or other acarid.

By "preventing a mite infestation" is meant reducing the success that a mite infestation will be established in an *Apis* colony.

By "treating a mite infestation" is meant reducing, stabilizing, or slowing the growth of a mite population in an *Apis* colony.

The present invention also relates to the following items:
1. A compound of formula (I), 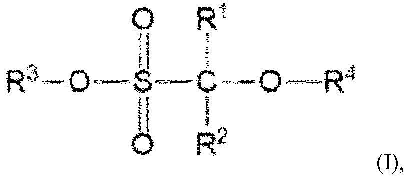 wherein
   R¹ represents hydrogen or alkyl, optionally substituted;
   R² represents hydrogen, alkyl, alkyloxyalkyl, alkylaminoalkyl, hydroxyalkyl, thioalkyl, thioalkoxyalkyl (thio can be all oxidation states), branched alkyl, phenyl alkyl, allyl, propargyl, phenyl, substituted phenyl, benzyl, heterocyclic alkyl, the heterocyclic ring covers oxygen, nitrogen sulfur containing ring of non-aromatic or aromatic ring; the alkyl described herein can be substituted with one or more halogen, hydroxyl, alkoxy, alkylcarbonyl, amino; thio and oxidation states, amido, hydroxycarbonyl, aryl ring, heterocyclic ring;
   R³ represents hydrogen, Na⁺, K⁺, Li⁺, Mg²⁺, Ca²⁺, provided when R³ represents Mg²⁺ or Ca²⁺ the molecules can be dimers; and
   R⁴ represents hydrogen or alkyl;
   wherein the compound of Formula I controls or reduces a pest relative.
2. A method of reducing or controlling a pest, the method comprising contacting the pest with an effective amount of a compound according to item 1.
3. The method of item 2 wherein the contacting of the pest occurs while the pest is in contact with a pollinating insect.
4. The method of item 3, wherein the pollinating insect is a honey bee.
5. The method of any of items 2-4, wherein the pest is a parasitic mite.
6. The method of item 5, wherein the parasitic mite is a *Varroa* mite.
7. A method of treating or preventing a parasitic mite infestation of a honey bee hive or treating or preventing varroosis, the method comprising contacting the hive with an effective amount of a compound according to item 1.
8. The method of item 7, wherein the parasitic mite is a *Varroa* mite.
9. A method of reducing or controlling a pest, the method comprising contacting the pest with an effective amount of a composition comprising a compound according to item 1 in a suitable form for delivery to the pest.
10. The method of item 9, wherein the pest is a parasitic mite.
11. The method of item 10, wherein the parasitic mite is a *Varroa* mite.
12. A controlled release composition for treating or preventing a parasitic mite infestation, the composition comprising an effective amount of a compound of item 1 in a suitable form for delivery to a honey bee parasitic mite.
13.. The controlled release composition of item 12, wherein the compound is released over the course of at least 24 hours.
14. The controlled release composition of item 12 or 13, wherein the compound is released over the course of at least 48 hours.
15. The controlled release composition of any of items 12-14, wherein the compound is released over the course of at least 72 hours.
16. The method of any of items 9-11, wherein
   R¹ represents hydrogen;
   R² represents hydrogen;
   R³ represents hydrogen or Na⁺; and
   R⁴ represents hydrogen.
17. A miticide delivery device, the device comprising a composition comprising the compound of item 1.
18. The miticide delivery device of item 17, wherein the device is selected form the group consisting of a strip, controlled release strip, tablet, reservoir, polymer disc, evaporation device, fiber, tube, polymeric block, membrane, pellet, and microcapillary.
19. The method of any of items 2-11, wherein the composition is in the form of a dust, granule, emulsifiable concentrate, wettable powder, soluble liquid concentrate, soluble powder, granules and dust, suspension concentrate, capsule suspension, water dispersible granule, oil dispersible granule, or microgranules.
20. The method of any of items 2-11 and 19, wherein the composition is in the form of a wettable powder.
21. The method of any of items 2-11, 19, and 20, wherein the compound is acetone sodium bisulfite.
22. Use of a compound of item 1 or composition thereof to control or reduce a pest.
23. Use of a compound of item 1 or composition thereof to control or reduce a pest, wherein said pest is a parasitic mite.
24. Use of a compound of item 1 or composition thereof to control or reduce a pest, wherein said pest is a *Varroa* mite.
25. Use of a compound of item 1 or composition thereof to control or reduce parasitic mite infestation in a honey bee hive.
26. A method of promoting the health of an insect by reducing or controlling a pest that preys on the insect, the method comprising contacting the pest with an effective amount of a compound according to item 1.
27. The method of item 26 wherein the contacting of the pest occurs while the pest is in contact with a pollinating insect.
28. The method of item 27, wherein the pollinating insect is a honey bee.
29. The method of any of items 26-28, wherein the pest is a parasitic mite.
30. The method of item 29, wherein the parasitic mite is a *Varroa* mite.

### EXAMPLES

Acetone sodium bisulfite (CAS no. 540-92-1) was tested for varroa mite control and bee safety.

The disclosure shows that the performance of acetone-sodium bisulfite adduct has varroa mite control over time at the performance level of the commercial standard, APIVAR®. Table 1 below sets forth experimental data regarding percent of total *Varroa destructor* drop onto sticky boards during whole hive treatment.

**Table 1**

| | **% of total *Varroa* drop over three 24-hour treatment periods** | | | |
|---|---|---|---|---|
| **Treatment** | **24** | **48** | **72** | **Total *Varroa* drop count onto sticky boards following treatment** |
| ASB* (solid) | 43.5% | 35.3% | 21.2% | 382 |
| ASB* (liquid) | 24.2% | 34.8% | 40.9% | 66 |
| NMP† | 30.8% | 31.1% | 38.1% | 289 |
| APIVAR® | 32.3% | 22.6% | 16.1% | 3100 |

| | | | | |
|---|---|---|---|---|
| * = acetone sodium bisulfite adduct † = N-methyl-2-pyrrolidone | | | | |

### OTHER EMBODIMENTS

From the foregoing description, it will be apparent that variations and modifications may be made to the invention described herein to adopt it to various usages and conditions. Such embodiments are also within the scope of the following claims.

The recitation of a listing of elements in any definition of a variable herein includes definitions of that variable as any single element or combination (or sub combination) of listed elements. The recitation of an embodiment herein includes that embodiment as any single embodiment or in combination with any other embodiments or portions thereof.

All patents and publications mentioned in this specification are herein incorporated by reference to the same extent as if each independent patent and publication was specifically and individually indicated to be incorporated by reference.

## Claims

1. A compound of formula (I), 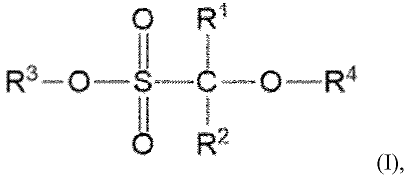 wherein
R¹ represents hydrogen or alkyl, optionally substituted;
R² represents hydrogen, alkyl, alkyloxyalkyl, alkylaminoalkyl, hydroxyalkyl, thioalkyl, thioalkoxyalkyl (thio can be all oxidation states), branched alkyl, phenyl alkyl, allyl, propargyl, phenyl, substituted phenyl, benzyl, heterocyclic alkyl, the heterocyclic ring covers oxygen, nitrogen sulfur containing ring of non-aromatic or aromatic ring; the alkyl described herein can be substituted with one or more halogen, hydroxyl, alkoxy, alkylcarbonyl, amino; thio and oxidation states, amido, hydroxycarbonyl, aryl ring, heterocyclic ring;
R³ represents hydrogen, Na⁺, K⁺, Li⁺, Mg²⁺, Ca²⁺, provided when R³ represents Mg²⁺ or Ca²⁺ the molecules can be dimers; and
R⁴ represents hydrogen or alkyl;
wherein the compound of Formula I controls or reduces a pest relative.

2. The compound of claim 1, wherein
R¹ represents hydrogen;
R² represents hydrogen;
R³ represents hydrogen or Na⁺; and
R⁴ represents hydrogen.

3. The compound of claim 1 or 2, wherein the compound is acetone sodium bisulfite.

4. A composition comprising the compound of any one of claims 1 to 3.

5. The composition according to claim 4 which is a controlled release composition for treating or preventing a parasitic mite infestation.

6. The composition according to claim 4 or 5 which is in a suitable form for delivery to a honey bee parasitic mite.

7. The composition of any of claims 4 to 6, wherein the composition is in the form of a dust, granule, emulsifiable concentrate, wettable powder, soluble liquid concentrate, soluble powder, granules and dust, suspension concentrate, capsule suspension, water dispersible granule, oil dispersible granule, or microgranules.

8. A method of reducing or controlling a pest, the method comprising contacting the pest with an effective amount of a compound according to any one of claims 1 to 3 or a composition according to any one of claims 4 to 7.

9. A method of treating or preventing a parasitic mite infestation of a honey bee hive or treating or preventing varroosis, the method comprising contacting the hive with an effective amount of a compound according to any one of claims 1 to 3 or a composition according to any one of claims 4 to 7.

10. A method of promoting the health of an insect by reducing or controlling a pest that preys on the insect, the method comprising contacting the pest with an effective amount of a compound according to any one of claims 1 to 3 or a composition according to any one of claims 4 to 7.

11. The method of any one of claims 8 to 10 wherein the contacting of the pest occurs while the pest is in contact with a pollinating insect.

12. The method of claim 11, wherein the pollinating insect is a honey bee.

13. The method of any one of claims 8 to 12, wherein the pest is a parasitic mite.

14. The method of claim 13, wherein the parasitic mite is a *Varroa* mite.

15. A miticide delivery device, the device comprising the compound of any one of claims 1 to 3 or the composition according to any one of claims 4 to 7.

16. Use of a compound of any one of claims 1 to 3 or composition according to any one of claims 4 to 7 to control or reduce a pest.
